# EUROPEAN PATENT APPLICATION

(11) **EP 4 458 468 A1**
(43) Date of publication of application: **06.11.2024**
(21) Application number: 23171673.9
(22) Date of filing: 04.05.2023
(51) Int. Cl.: B01L 3/02, B01L 9/00, G01N 35/10

(54) **MODULES FOR LIQUID HANDLING APPLICATIONS**

(71) Applicant: Sartorius Biohit Liquid Handling Oy, 00880 Helsinki (FI)
(72) Inventor: HINTIKKA, Ville, 00880 Helsinki (FI)
(74) Representative: Laine IP Oy

(57) **Abstract**

According to an example aspect of the present invention, there is provided a liquid handling module comprising: a housing element having a width, height, and depth, wherein the housing element comprises: a back face and a front face comprising two portions wherein the first portion of the front face protrudes outwardly from the front face and wherein the first portion of the front face has a width which is less than the width of the back face.

## Description

### FIELD

Pipettes are hand-held or automated media delivery devices that are used for delivering a precisely defined amount of liquid from one receptacle to another receptacle. Liquid is aspirated into and delivered from a disposable tip that is attached to a lower end of the pipette. The present disclosure relates to a module, which is configured to have beneficial dimensions so that operations may be conducted effectively with respect to common laboratory consumables such as microwell plates.

### BACKGROUND

In laboratories or similar scientific or industrial settings, it is beneficial to have automated devices such as pipettes for for example routine or very precise work. Automated pipettes may be multichannel units or similar performance may be achieved with a plurality of single-channel modules, which can be arranged in different configurations.

### SUMMARY OF THE INVENTION

The present disclosure relates to modules usable for liquid handling operations. Such a module may include a pipetting mechanism to facilitate liquid handing operations. Due to the configuration of the modules and apparatuses described herein, multiple modules can be arranged in a manner which improves the speed and flexibility of the liquid handling system as a whole.

The invention is defined by the features of the independent claims. Some specific embodiments are defined in the dependent claims.

According to a first aspect of the present disclosure, there is provided a liquid handling module comprising: a housing element having a width, height, and depth, wherein the housing element comprises: a back face and a front face comprising two portions wherein the first portion of the front face protrudes outwardly from the front face and wherein the first portion of the front face has a width which is less than the width of the back face.

An embodiment of the first aspect is wherein the width of the back face is not more than 18 millimeters, wherein the width of the fist portion is not more than 9 millimeters and wherein the total width of the module does not exceed 18 millimeters.

According to a second aspect of the present disclosure, there is provided a liquid handling apparatus, comprising at least one first module of the first aspect and at least one second module of the first aspect, wherein said first module and said second module are arranged in a paired interlocked arrangement, wherein in the paired interlocked arrangement the first portion of the front face of the first module and the second portion of the front face of the second module are facing each other and in proximity and/or contacting each other.

### BRIEF DESCRIPTION OF THE DRAWINGS

FIGURES 1A, 1B, 1C and 1D illustrate schematic views of an example apparatus 100 capable of supporting at least some of the embodiments of the present invention;
FIGURES 2A, 2B, 2C and 2D illustrate schematic views of an example housing 101 capable of supporting at least some of the embodiments of the present invention;
FIGURES 3A and 3B illustrate schematic views of an example apparatus 301 and an example apparatus 302, said apparatuses being capable of supporting at least some of the embodiments of the present invention;
FIGURES 4A and 4B illustrate schematic views of an example apparatus 110 capable of supporting at least some of the embodiments of the present invention;
FIGURES 5A, 5B and 5C illustrate schematic views of an example apparatus 120 and a bushing 125 capable of supporting at least some of the embodiments of the present invention;
FIGURES 6A, 6B, 6C and 6D illustrate schematic views of an example apparatus 200 capable of supporting at least some of the embodiments of the present invention;
FIGURES 7A, 7B and 7C illustrate schematic views of an example apparatuses 220, 230 and 240, respectively, which are capable of supporting at least some of the embodiments of the present invention;
FIGURES 8A and 8B illustrate schematic views of an example apparatus 700 capable of supporting at least some of the embodiments of the present invention;
FIGURES 9A, 9B and 9C illustrate schematic views of an example apparatus 190 capable of supporting at least some of the embodiments of the present invention; and
FIGURES 10A, 10B and 10C illustrate schematic views of an example apparatus 191 capable of supporting at least some of the embodiments of the present invention.

### EMBODIMENTS

The present disclosure provides a module (which may be also termed a modular unit) for automated liquid handling operations. The module shape and dimensions are configured to allow multiple modules to be placed side-by-side in close proximity. This allows performing liquid handling efficiently, for example when using microwell plates. Further, at least some modules of the present disclosure are configured so that an optimal tool-to-tool distance between modules is obtained. The module, which may be an automated module, may comprise a pipette mechanism or other laboratory device. Various types of module are provided to accomplish liquid handling tasks.

Further, different types of module fixture bases are provided herein. The bases allow flexible use of the modules, for example with at least one liquid handling apparatus.

In the context of the present disclosure, the term "pipette" is intended to refer to a media delivery and handling device such as a micropipette, used for example in chemical, biological and medical applications. Such a pipette may utilize air displacement, positive displacement or volumetric technologies, for example.

The term tip (also disposable tip) refers to tools, which are roughly cone-shaped and open at the wide end, and which are designed to be attached to a pipette. Tips are used on pipettes to facilitate liquid handling operations. Tips are commonly made of plastic (for example, polypropylene), or in certain cases out of other materials. When plastic is used as tip material, the plastic may filled with carbon powder or other additives. Tip volumes differ, for example ranging from 10 microliters to 10 milliliters. However, both larger and smaller volumes than the above-mentioned volumes may be used in the context of the disclosure.

In the context of the present disclosure, reference is made to: a liquid handling process, a process, operations, etc. This is intended to refer to a laboratory process involving liquids and may include but is not limited to dispensing, transferring, sensing, increasing and/or decreasing, radiating, volumes of liquid in and outside of receptacles such a microwell plates, bottles, dishes.

The material of the parts, in particular the parts of a module and/or a module fixture base, may be for example aluminium, iron, titanium, copper, steel, alloy steel, bearing steel, stainless steel or any combination or alloy thereof. An exemplary material suitable for use in the context of the disclosure is 6082-T6 aluminium which may be anodized. Such a material is suitable for laboratory use and has a good strength to weight ratio. In addition, plastics may be used as the material of the parts. In at least some exemplary embodiments, a module and/or a module fixture base may comprise non-metallic parts. For example, robust plastics such as glass fiber filled plastic, carbon fiber filled plastic or Polyether ether ketone, PEEK, may be used. A benefit of not using metal is reducing the possibility of metal contamination within a laboratory setting.

In typical laboratory applications, laboratory items are used, such as laboratory consumables. Laboratory consumables may include, for example: a pipette tip package, a disposable pipette tip package, a microwell plate, a bottle rack, a test tube rack, any other laboratory equipment, or a package or collective arrangement of any of the preceding objects. In the embodiments presented in this disclosure, the sizing of the liquid handling system or laboratory device as well as the sizing of the objects may be preferably in accordance with the following standards: ANSI SLAS 1-2004, (formerly recognized as ANSI/SBS 1-2004), but may also be dimensioned or shaped otherwise. The shapes or footprints of the objects may be rectangular, square, round, oval, circular, annular, t-shaped, x-shaped, or any other geometrical shape.

In typical laboratory applications, at least one microtiter plate (also known as a microplate or microwell plate or multiwell) is used. As is known in the art, typical plate sizes are 6, 12, 24, 48, 96, 384 or 1536 wells, and typical well sizes are from 10 nanoliters to 50 milliliters. The 384-well plate comprises 16 rows and 24 columns of wells, with the standard well-to-well distance being 4.5 millimeters. Similarly, the 96-well plate comprises 8 rows and 12 columns of wells, with the well-to-well distance being 9 millimeters. An exemplary microplate may have a footprint of 127,76 millimeters times 85.47 millimeters.

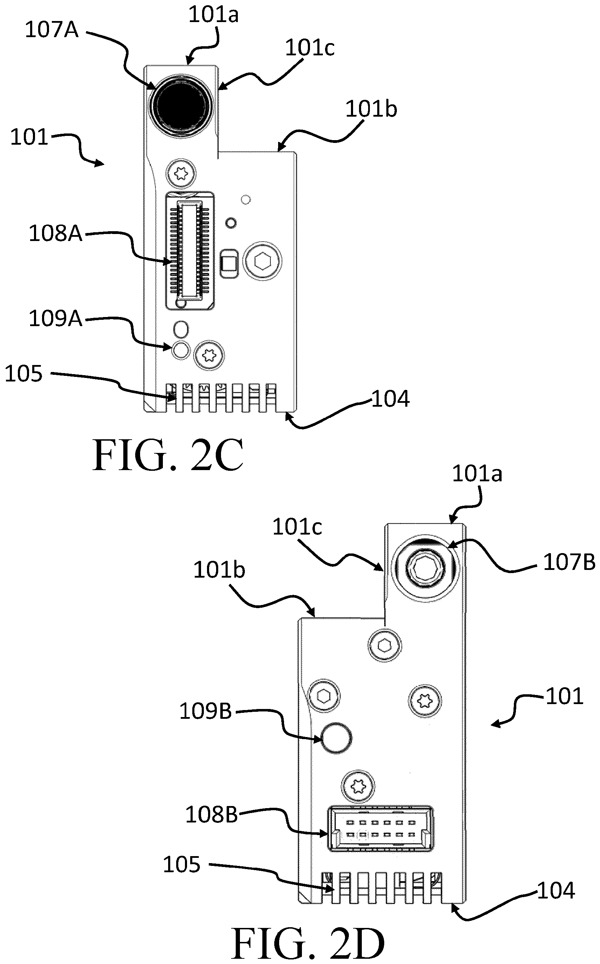

A module may comprise a housing element 101, which may also be termed simply a housing. A housing element comprises an interior and an exterior, where the exterior comprises several surfaces (faces). The housing element 101 is beneficially shaped so that, when viewed from above, the cross-section of the element is similar to that of an oblong with a missing corner. In other words, the cross-section appears similar to that of a rectangle with a protrusion extending from one side. In at least some embodiments, the width of protrusion is less than the width of the rectangle and one side of said protrusion is aligned with one side of the rectangle. Variations of the shape, for example rounding the corners of the rectangle, are also usable. The shape of the housing is illustrated by the attached Figures, especially Figures 2C and 2D where the cross-section can be seen. The missing corner of the cross-section may be beneficially sized to correspond with the corresponding protrusion of another module housing, so that the modules may be arranged in interlocking pairs. Interlocking pairs, also known as interlocked pairs or interlocked paired configuration, are discussed further below.

The modules of this disclosure are configured to be attached to various apparatuses, which are suitable for liquid handling. Exemplary liquid handling apparatuses may be at least one of the following: manipulator, XYZ gantry type-robot, articulated robot arm. The attaching may be done via any suitable attachment means, for example.

The housing element 101 may comprise one or more attachment means, such as ports, for example stud ports 107 or 109. Ports may comprise at least one cavity. Ports may comprise locking means. The stud ports 107 and 109 are usable to attach a stud to the housing. The stud may be attached to the apparatus, for example via a module fixture base, and thus the housing is consequently attached to the apparatus. A stud which is inserted into a port may be attached to the housing via any of the following ways (for example via the following locking means): friction, push fit arrangement, magnetic force, mechanical fastening such as screwing or clicking into place, spring centering arrangement where an attachment element is coupled with a spring so that the attachment element is configured to restrict the movement of the stud, a bushing. For example, a push fit arrangement may comprise a bushing such as bushing 125 configured to receive a stud, wherein the bushing is configured so that a friction attachment is achieved when the stud is inserted into the bushing. The stud and port coupling may allow the housing to rotate around the stud. A spring centering arrangement may comprise a port comprising a spring-mounted attachment element configured so that the attachment element does not impede the initial insertion of a stud, but after the insertion the attachment element is pushed by the spring into a position where it holds the stud in a desired position.

A stud may be a so-called long stud, which may be for example 1 cm to 50 cm long. A stud may be a so-called short stud, which may for example, 0,5 cm to 5 cm long. A stud may comprise a groove near one end or both ends to of the stud to facilitate the fastening (in other words, the attachment) of the stud to the housing or other elements. Such a groove may provide a receptacle for the end of a screw, for example. Suitable stud diameters are from 3 mm to 20 mm, in particular from 4 mm to 8 mm, for example 5 mm.

Ports of the housing element 101 may additionally or alternatively used to attach at least one pin, such as an alignment pin, to the housing. The alignment pin may be attached to the housing and configured to couple with an apparatus. Said alignment pin may be configured so that the housing element is rotationally fixed with respect to a stud attached to an apparatus when the pin and the stud are coupled to said apparatus. Rotation of the housing with respect to the stud is prevented because, while the housing may be rotatably fastened to the stud, the housing cannot rotate around two separate points on the same plane (the stud and the pin) at the same time. A robust attachment may be thus formed using at least one alignment pin and another fastening element, for example a stud, to attach the housing element to another apparatus. Such an arrangement may be beneficial for at least the reason that the housing is tightly attached and rotation locked with respect to the stud. Further, this type of attachment allows the housing to be easily removed without tools, for example by moving the housing downward so that it disengages from the stud. This is beneficial in liquid handling applications employing a robot, as the robot may change the module by removing it from the stud with the aid of a suitable fixture to hold the module in place while the robot moves away, thereby retracting the stud from the housing and/or alignment pin from a fixture base.

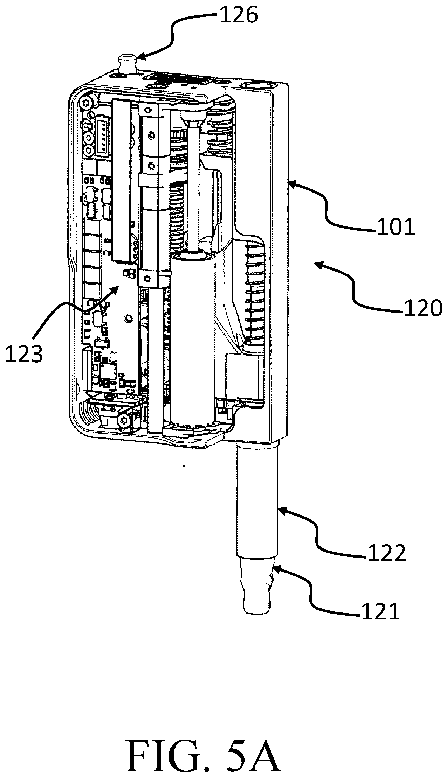

The alignment pin and stud may connect to the same side of the housing element, in particular to the top side for example. For example, the alignment pin may be fixedly attached to the top surface of the module. The alignment pin may be configured to connect to a port and/or socket of an apparatus. Said socket may comprise a cavity and optionally comprise an attachment element and/or a spring. When the alignment pin is within the cavity of the socket, an attachment element of the socket may be present within the groove of the pin. The attachment element may be connected to the spring so that the attachment element is configured to move into the groove when the pin is inserted into the cavity, and move out of the groove when the pin is retracted. The diameter of an alignment pin may be, for example, 4 mm at the base and 3 mm at narrowest portion of the groove. The alignment pin may be shaped so as to resemble an hourglass. An example of an alignment pin is seen in Fig. 5A (pin 126).

The modules disclosed herein may comprise tooling (also referred to as tools). This is intended to refer to a device which is at least partially within the housing or connected to the housing and which allows the module to perform the desired function. In other words, the part of the device is meant which is used in operations by the module. Modules may comprise a plurality of tools. For example, in a pipette module, the tool may be the pipette mandrel and in a sensing module, the sensor may be the tool. When reference is made to the tool-to-tool distance, the distance is from the center of the first tool to the center of second tool, unless otherwise indicated. The tool-to-tool distance between pipette modules is particularly important as it is beneficial that the tool-to-tool distance corresponds to the well-to-well distance of the microwell plate format. The modules disclosed herein may be termed automated, whereby the control of the pipette mechanism or other tooling is at least in part performed by a control apparatus such as control electronics.

The modules disclosed herein may comprise a pipetting mechanism. The pipetting mechanism may comprise at least one of the following: a motor (for example an electric motor), an optional transmission, at least one lead screw, at least one linear guide, at least one slide assembly and locking hook, at least one cylinder and a piston configured together to displace liquid, an ejector assembly comprising a locking tab, an ejector spring, control electronics, a tip mandrel, an ejector sleeve, a mandrel guide, a tip cone (also known as the nose cone). The pipetting mechanism may be operated by piston-driven fluid displacement, for example by piston-driven air displacement. The at least one piston may connected to the electric motor and configured for fluid displacement when the piston is moved within the cylinder. The cylinder may be connected to the tip mandrel, for example by a fluid line, whereby the fluid displacement occurs at least in part within the tip mandrel. The modules disclosed herein may be configured to dispense multiple times from a single aspiration, for example dispensing 100 microliters 5 times from an aspiration of 500 microliters. Such a configuration may be handled by the control electronics of the modules.

The pipetting mechanism may be within the module housing 101, or parts of the mechanism may be outside housing 101 or extend from within housing 101 to outside the housing 101. For example the tip mandrel and tip cone are at least partly outside the housing in at least some embodiments described herein. The ejector sleeve may protrude from the housing and accommodate the tip mandrel. The upper end of the ejector sleeve may contact the ejector assembly inside the housing.

The modules disclosed herein may include control electronics which allow control and diagnostic information to be generated, received, sent, and/or implemented with respect to the module tooling or mechanism. The modules may communicate via at least any of the communication methods disclosed below in the disclosure and said communication may be from a controller to at least one module, between modules, or from a user device to at least one modules. Modules may be connected to one another in serial, parallel, tree, or other suitable network topologies. For example, the modules may be connected to one another via at least one communication network. Communication methods and/or communication networks may comprise, for example: CANBUS, WiFi, Bluetooth or Ethernet. A fixture base may comprise at least one device configured to provide and/or access at least one communication network. The fixture base may also communicate to and from at least one communication network, for example via a fixture base controller.

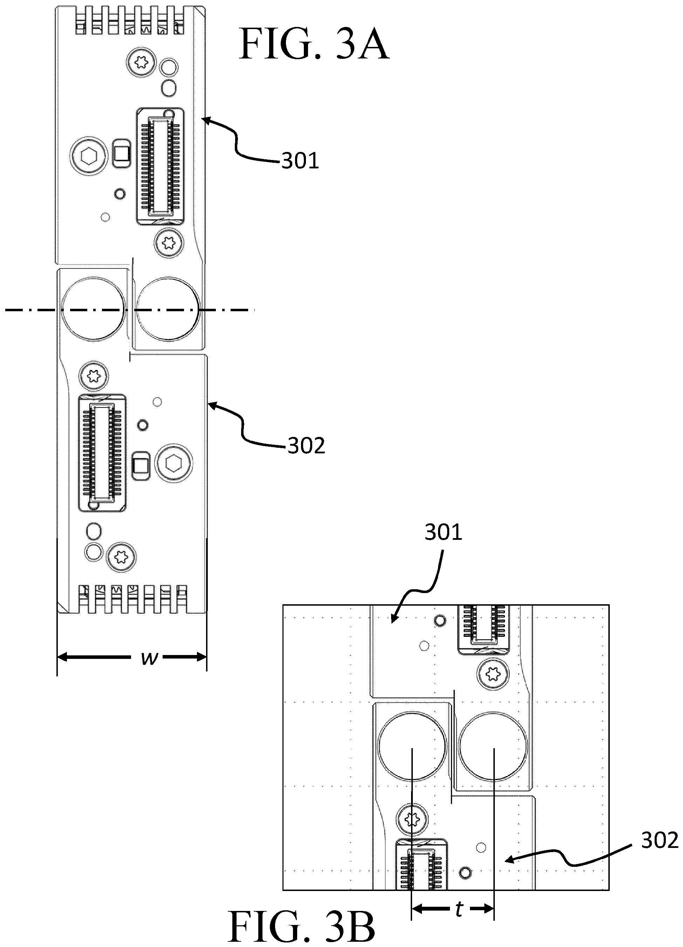

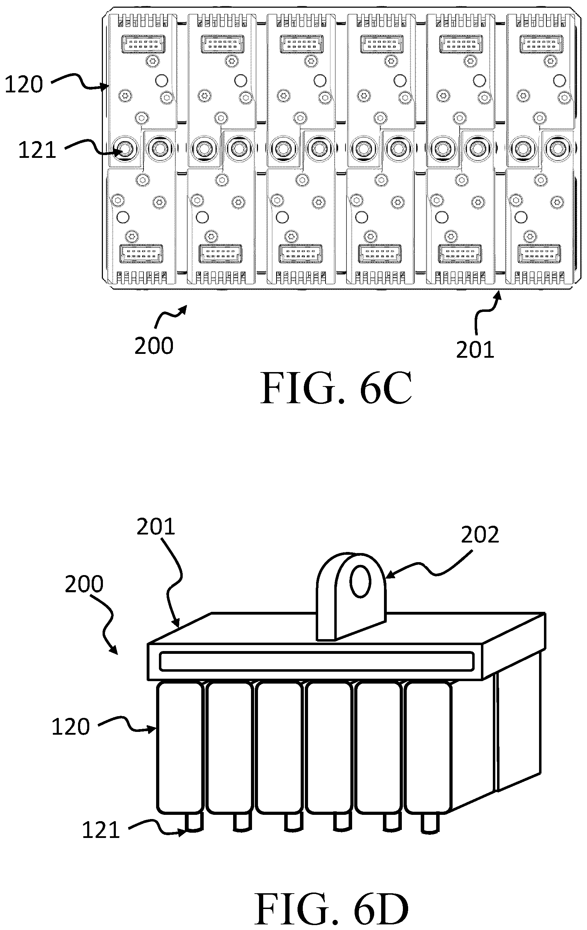

A beneficial configuration of a pair of modules, for example modules 100, is a so-called paired interlocked arrangement. In such a situation, a first module and a second module are arranged so that the protrusion of each module is in contact or in proximity with the non-protrusion portion (adjacent to the protrusion) of the other module. The front faces of the modules face each other and are parallel to one another. An example of the arrangement can be seen in Fig. 6C, where 6 pairs of modules are arranged in the paired interlocked arrangement. In other words, referring to figure 2C, the edge 101a of the first module contacts or is arranged in proximity to the edge 101b of the second module. Further, the edge 101a of the second module contacts or is arranged in proximity to the edge 101b of the first module. Figures 3A and 3B illustrate an exemplary interlocked configuration of a module pair. Each module of a module pair may be fixed to the same base element such as a base body. Each module of a module pair may be fixed to separate base elements or movable portions of a single base element. Such an arrangement provides the beneficial effect of allowing movement of the modules with respect to one another during liquid handling operations.

Regarding the paired interlocked arrangement, such a configuration is beneficial for at least the reason that the tooling of the pipettes will have a shorter distance (tool-to-tool, center-to-center) than the module width. This can be seen in Fig. 3A and 3B, for example, where the tool centerpoints are arranged in a line and where the distance between the centerpoints of any adjacent tools is less than the width (maximum width) of a single module. In other words, the modules of the present disclosure are configured so that an optimal tool-to-tool distance is obtained without reducing the width of the module. An optimal distance corresponds to the well-to-well distance (well spacing) of a microwell plate. A module width corresponding to the well-to-well distance throughout the module would necessitate a module having extensive height and/or or the component sizes would be so small that the performance of the module would suffer.

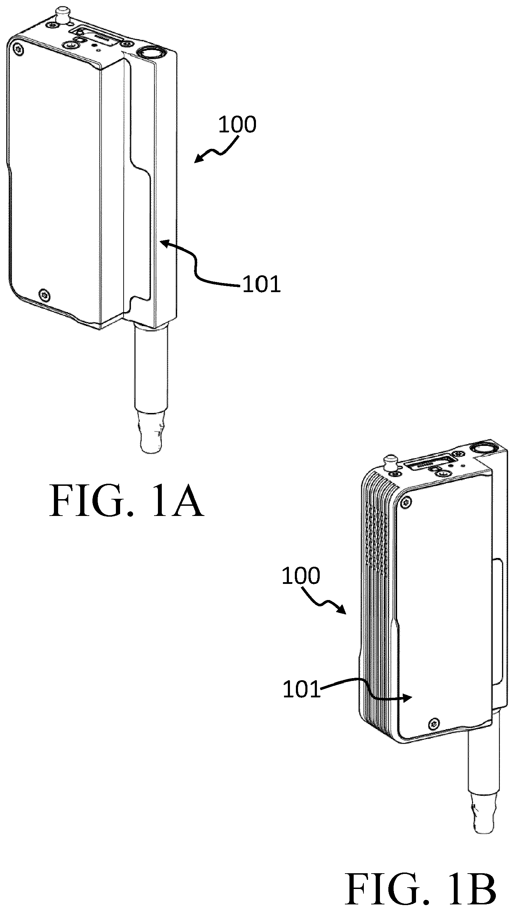

FIGURE 1A - 1D show a schematic diagram of an exemplary embodiment of the present disclosure, wherein a module 100 is presented.

In Fig. 1A, an isometric view of the module 100 is shown. Module 100, which is a pipetting module, comprises housing 101. In Fig. 1B, a second isometric view of the module 100 is shown.

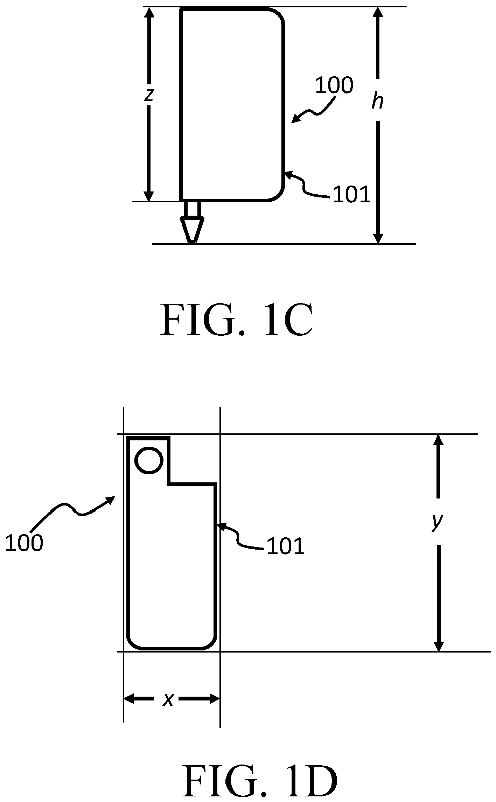

In Fig. 1C, a side view of the module 100 is shown. Module 100 has a body height *z* as shown in the figure, as well as a total height *h*, wherein the total height also includes the tip mandrel and any attached tip. The body height only includes the height of the housing 101. The total height *h* may be, for example, from 60 to 200 millimeters, preferably from 80 to 120 millimeters, for example 106 millimeters. The body height *z* may be from 50 to 180 millimeters, preferably from 60 to 90 millimeters, for example 72 millimeters.

In Fig. 1D, a top view of a module 100 is shown. Module 100 has a depth *y*, which may be from 30 to 60 millimeters, for example 40 millimeters. Further, the module has a width *x*, which may be from 5 to 20 millimeters, for example 9 millimeters or 18 millimeters, with a tolerance of for example plus/minus 1 millimeter, in particular with a tolerance of plus/minus 0.3 millimeters. A beneficial value of x is 18 millimeters. This allows a pair of modules, when arranged in the preferred interlocked arrangement as discussed herein, to have a distance of approximately 9 millimeters between the pipette tips, which corresponds to the well-to-well spacing of a typical 96 microplate. In such an embodiment, the combined width of the pair of modules does not exceed 18 millimeters. Thus, 4 pairs of pipetting modules, 8 modules in total, would correspond to the 8 rows of a 96-well plate. Alternatively, 6 pairs of modules may be used, whereby the modules correspond to the 12 columns of a 96 well plate. In such a case, there is no need for backtracking or using a single pipette module for more than one row or column, as could happen with differently configured devices. This is beneficial for the process speed.

Pipetting modules 100, 120, 301, 302 may be configured in a first exemplary configuration to comprise a maximum dispensable volume of liquid to be between 60 microliters and 125 microliters. Suitable tips are 10 microliter tips or 60 - 125 microliter tips. For example tips such as 60, 75, 100, 120 and/or 125 microliters may be used. The dispensing volume is adjustable. Suitable dispensing volumes are from 0.2 microliters to 125 microliters, in particular 5 microliters, 10 microliters, 60 microliters, 120 microliters. For example, 100 microliters may be dispensed using a 100 microliter tip or a 125 microliter tip. For example, 10 microliters may be dispensed using a 10 microliter tip.

Module 100 may be configured in a second exemplary configuration to comprise a maximum dispensable volume of liquid to be between 60 microliters and 1200 microliters, for example to be between 1000 microliters and 1200 microliters. Suitable tips are 1000 microliter tips or 300 microliter tips. The dispensing volume is adjustable. Suitable dispensing volumes are from 4 microliters to 1200 microliters, in particular 5 microliters, 10 microliters, 15 microliters, 20 microliters, 300 microliters, 1000 microliters, 1200 microliters. For example, 1000 microliters may be dispensed using a 1000 microliter tip. For example, 300 microliters may be dispensed using a 300 microliter tip.

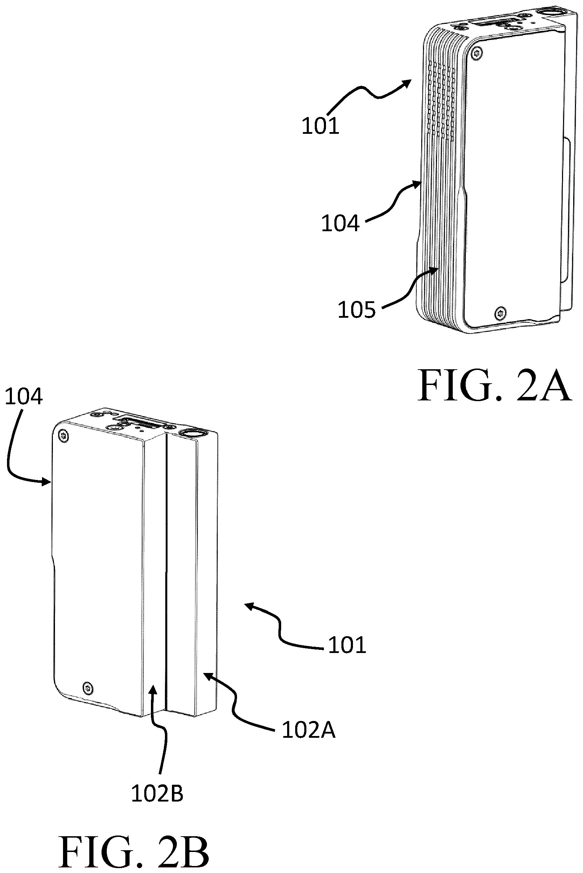

FIGURES 2A - 2D show a schematic diagram of an exemplary embodiment of the present disclosure. An exemplary module 100 is presented in the figures, shown without tooling for the sake of clarity. As seen in Fig. 2A, which is a side view of the module 100, module 100 comprises housing 101, which optionally comprises heat dissipation grooves 105. Heat dissipation grooves are preferably provided within the back surface 104 of the module, although they may be optionally provided in other surfaces as well. As further seen in Fig. 2B, which is an isometric view of the module 100, module 100 has back face 104 and a front face, wherein the front face comprises first and second portions 102A and 102B.

The module 100 is beneficially shaped so that first portion 102A protrudes further from the module housing 101 than second portion 102B. The protrusion formed by face 102A is preferably unitary with the remainder of the housing 101, although it can alternatively be a separate, removable portion. Said protrusion is preferably located so that one side of the protrusion continues or is coplanar with the side face of housing 101. In other words the protrusion is aligned with the side face so that the side face continues throughout the protrusion. The other side of the protrusion is a face separating the portions 102A and 102B. The dimensions of the housing 101 are preferably in accordance with the beneficial dimensions specified elsewhere within this disclosure. For example, the housing 100 may be configured so that the width of the first portion (102A) of the front face may be not more than half the width of the back face (104), thereby the paired interlocked configuration is achievable.

As further seen in Fig. 2C, which is a top view of the module 100, the protrusion formed by the face 102A may be also be defined as follows: the front surface of the housing 101 comprises cross-sectional edges 101a and 101b, which are connected by edge 101c. The width of face 102A thus corresponds to the length of edge 101a and the width of face 102B corresponds to the length of edge 101b. Edge 101c defines the extent or depth of the protrusion. Figure 2C shows the face of the housing element which may be termed the top face.

With reference to the dimensions *x* and *y* presented above in this disclosure, it is noted that in an exemplary embodiment where the width of the module 100 is 18 millimeters, the length of edge 101a and edge 101b is then be approximately 9 millimeters, and the length of edge 101c would be 10 millimeters. When two such modules are arranged in the interlocked configuration as seen in for example Fig. 3A or Fig. 6C, the total depth (in the *y* direction) of the pair of modules is then approximately 68 millimeters, which is less than twice the *y* depth of the modules, due to the protrusions of the modules fitting side by side in the *x* direction. Such a configuration is beneficial due to the reduced space taken up by the pair of modules. In further exemplary embodiments, the length of edge 101c can be between 5 and 25 millimeters, preferably between 18 and 15 millimeters. Such a variation necessarily changes the total depth of the pair of modules.

Housing 101 also comprises at least one port. Ports may be used for: interfaces, power transfer, liquid transfer, data transfer, indicators, mechanical connectors. Said ports have been omitted from at least some of the drawings presented herein for reasons of clarity.

Referring to Fig. 2C, port 107A may be a socket configured to accept a stud, for example a short or long stud as discussed above, and/or stud 211 as discussed later. Port 108A may comprise a communication port. Port 109A may comprise a port configured to accept an alignment pin.

As further seen in Fig. 2D, which is a bottom view of the module 100, the module 100 may comprise port 109B, which is similar to port 109A as discussed above. Further the module may comprise port 108B which is similar to port 108A. Port 107B may be a port for the tooling, for example a port via which the tip mandrel extends from within the housing, for example via ejector sleeve connected to port 107B. As can be seen from the Figure 2D, the tooling port (107B) is within the area of the protrusion. In other words, the protrusion accommodates the tooling port of the module. Figure 2D shows the face of the housing element which may be termed the bottom face.

The housing 101, any surfaces thereof, and in particular the bottom and/or the top faces of the housing 101 may be adapted in order to include different functionalities within the housing. Such adaptation may comprise providing a required number of ports with appropriate dimensions.

FIGURES 3A and 3B show a schematic diagram of module 301 and module 302 in a paired interlocked arrangement. Module 301 and 302 may be similar or identical to module 100 or module 110, for example.

Figure 3A presents a top view of modules 301 and 302. In Fig. 3A, it can be seen that the modules are arranged so that the tool centerpoints of the modules are on the same imaginary axis. The imaginary axis has been marked in Fig. 3A with a dotted line. It can be seen from the figure that the imaginary axis is essentially horizontal, so that the tool centerpoints are orthogonally aligned with respect to the sides of the module. In other words, if one has several pairs of modules arranged as in Fig. 3A and placed side-by-side, such an arrangement allows all of the modules to have the tool centerpoints aligned along a single axis.

It can be further seen from Fig. 3A that the total width of the paired modules, *w*, is not greater than the width of a single module 301 or 302. This is beneficial for at least the reasons laid out elsewhere in this disclosure.

Figure 3B is a partial enlargement of Figure 3A, wherein the detail of the tool centerpoints can be seen. Tool-to-tool distance *t* is marked with respect to the figure. It can also be seen from the figure that a small gap may exist between the modules 301 and 302 either in the vertical (with respect to this figure) dimension or the horizontal dimension. Such a gap may be from 0.1 mm to 2 mm, for example less than 1mm, in particular 0.3 mm with a tolerance of plus/minus 0.1mm. However, in some beneficial configurations the modules contact each other in at least one of or both horizontal and vertical dimensions. In other words and with reference to Fig. 2D, at least one of the following may be true: the surface 101a of module 301 contacts the surface 101b of module 302, the surface 101b of module 301 contacts the surface 101a of module 302, and/or the surfaces 101c of modules 301 and 302 contact one another.

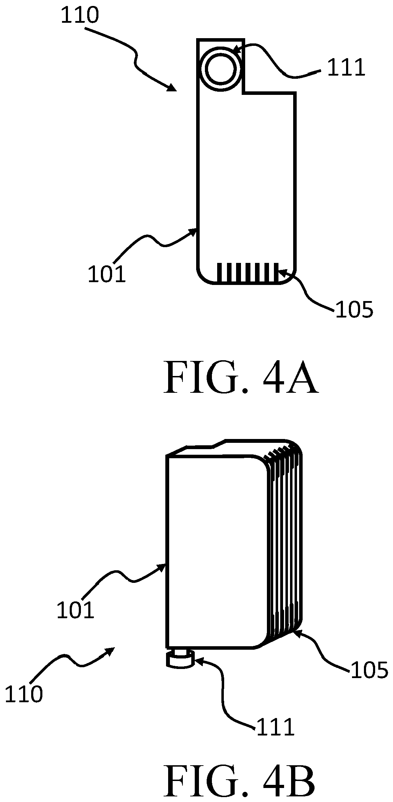

FIGURES 4A and 4B show a schematic diagram of an exemplary embodiment wherein sensor module 110 is provided, utilizing the housing 101 with a modified bottom surface. Sensor module 110 is similar to module 110 with the difference that the bottom plate of the housing 101 has been adapted as seen in Fig. 4A, which is a bottom view, to accommodate a sensor unit 111. As seen in Fig. 4B, sensing unit 111 extends from within the housing. Sensing unit 111 comprises a sensor unit, which is visible within the figures, and control electronics, which are within the housing 101 and therefore not visible in the figures. In a preferred embodiment, sensing unit 111 may be an imaging unit and comprise a lens.

Preferred sensors suitable for use with and/or within any of the modules disclosed herein, for example the module 110, include sensors for at least one of: photography, pressure sensing, thermal imaging, hyperspectral imaging, LIDAR sensing, capacitive sensing, inductive sensing, and/or ultrasonic sensing.

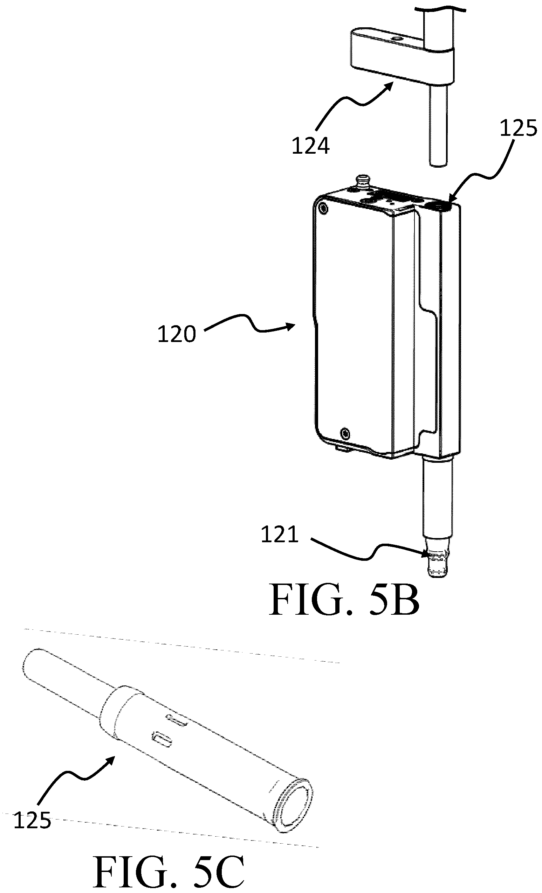

FIGURES 5A, 5B and 5C show isometric schematic diagrams of a pipetting module 120 and of bushing 125. Pipette module 120 comprises housing 101, mandrel 121, ejector sleeve 122 and pipette mechanism 123. Alignment pin 126 is attached to housing 101. Suitable dimensions and configuration for alignment pin 126 are any suitable dimensions and configuration, including the alignment pin configurations and dimensions disclosed elsewhere within this disclosure. The module 120 also comprises a side cover which is removed in Fig. 5A to show mechanism 123. Mechanism 123 is located within housing 101. Mechanism 123 may comprise any of the components discussed above with respect to pipetting mechanism. As seen in the Figures, the mandrel 121 extends from within the body 101. Mandrel 121 is positioned movably within ejector sleeve 122, ejector sleeve 122 being attached to housing 101. A tip (not shown) may be fitted onto the mandrel 121 for liquid handling operations. Tip removal may performed by retracting mandrel 121 so that the tip contacts ejector sleeve 122 and disengages from the mandrel. The side cover may be fastened to the housing by any suitable fastening means, including those disclosed within this disclosure, in particular by means of screws and/or magnets. Further, any of the surfaces of the housing 101, in particular the bottom surface and top surface, may comprise detachable covers. Such covers may form a portion or an entirety of a surface. Such covers are beneficial as different covers may provide different ports, which allows the housing to be adapted to different applications.

Figure 5B shows module 120 with the side cover in place. Further, Fig. 5B shows a partial view of stud mechanism 124, which comprises a stud and a horizontal support element. The horizontal stud element extends horizontally and comprises a port. The port is located on the underside of the horizontal stud element and is thus not visible in the figure. The port may be configured to receive an alignment pin, for example the alignment pin of the module 120. The stud of the stud mechanism may be configured to be inserted into a port of module 120. When the alignment pin is inserted into the port of the horizontal stud element and the stud is inserted into a port of the module, a robust attachment is achieved as discussed above. The top edge of centering and friction attachment bushing 125 is shown within a port of the module in the Figure 5B (the majority of bushing 125 is obscured by the module).

FIGURE 5C shows an isometric schematic diagram of centering and friction attachment bushing 125. Bushing 125 comprises a bushing cavity, seen on the right side of the figure. Any of the modules disclosed herein may comprise bushing 125. A bushing such as bushing 125 may be located within the housing 101, for example on the top side of the housing (referring to Figure 5B). A bushing within the housing may be configured so that a stud is insertable into the cavity of the bushing, for example the bushing may be arranged concentrically with a port such as stud port 107A. For example, referring to Figure 5B, the bushing may be arranged within the housing so that the stud of stud mechanism 124 may enter the bushing cavity. When a stud is inserted into the bushing cavity, the circumference of the stud contacts the walls of the bushing so that a friction fit is achieved. The bushing may be arranged so that the bushing, the mandrel and the stud are concentrically arranged, i.e. they share the same centerpoint when viewed from above. This provides a benefit that force from the stud is aligned with the tool centerpoint (the mandrel centerpoint). Further, the bushing may be configured so that it acts as a shock absorbing element between the housing and the stud. This may be achieved by the bushing extending into the housing so that the narrow part of the bushing (left side of figure) contacts the interior of the housing and/or other components such as a spring. For example, when one end of the bushing contacts the stud and the other end a spring arranged within and/or in contact with the housing, the spring and/or the bushing will flex when force is applied via the stud. Suitable materials for the bushing are at least one of the following: polyoxymethylene, polyethylene, ABS.

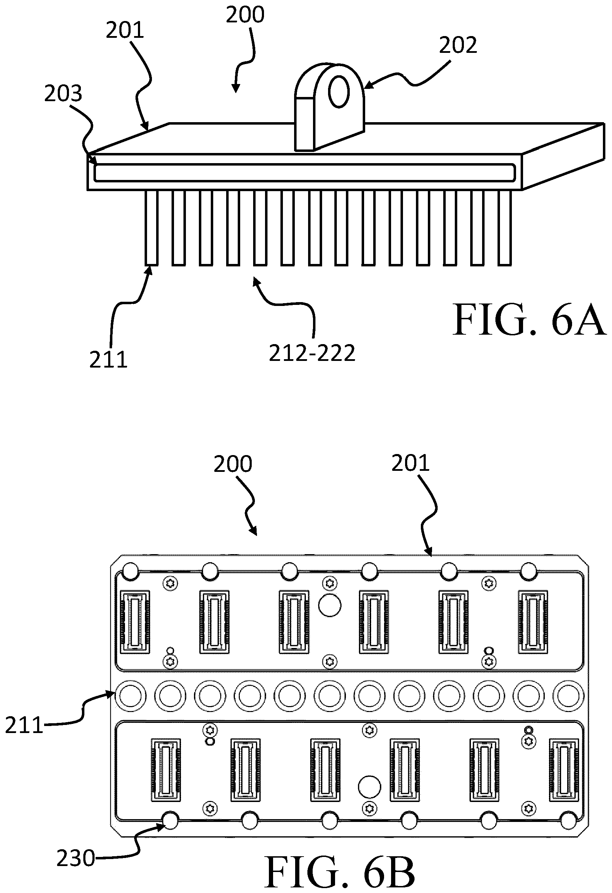

FIGURES 6A - 6D show a schematic diagram of an exemplary embodiment of the present disclosure, wherein a module fixture base 200 is usable to arrange and manipulate a plurality of modules 120.

As seen in Fig. 6A, module fixture base 200 comprises: body 201, module fixture base attachment 202, indicator 203, and at least one stud attachment 211.

Body 201 is a rigid structure capable of supporting the other components of the module fixture base. Preferred materials include the materials discussed previously within this disclosure.

Attachment 202 is configured so that the module fixture base 200 may be attached to a manipulator, such as a pipette handling robot or an automated or computer-controlled multi-axis router. The attachment 202 may be mechanically simple as exemplarily disclosed within Figure 6A-6D. Alternatively, attachment 202 may be adapted to suit the handling device, for example it may couple with the end-of-arm-tooling of an industrial robot.

Indicator 203, which is an optional feature of base 200, is used to convey user interface information regarding the base 200 and the modules 100. Indicator 203 may comprise at least one of the following: status light, video screen, LCD screen. Indicator 203 may be configured to show a status light (for example red, yellow and/or green) for each connected module 100, or it may be configured to display textual information such as "module 6 error", or to switch between the aforementioned configurations. Indicator 203 may be present on only one side of the base 200 as depicted, or on two or more sides including the top surface of the base.

Stud attachment 211 is representative of a plurality of stud attachments including studs 211, 212, 213, 214, 215, 216, 217, 218, 219, 220, 221 and 222. The stud(s) may comprise a groove which may be usable to attach the module to the housing as discussed elsewhere within this disclosure. As discussed elsewhere within this disclosure, the number of the stud attachments may vary. The module fixture base may comprise attachment means for the studs 211-222, for example at least one of the following: fastening ports, a nut, and a bolt. Said attachment means have been omitted from the figures for the sake of clarity. Studs may be fastened to the base via any suitable means of fastening studs including the means discussed elsewhere within this disclosure.

The configuration of the base 200 allows for several different configurations of the base. For example, the base may comprise a total of 1-200 fastening ports for studs, in particular 6 - 36 ports, for example 6, 12, 18, 24, 36 ports. It follows that the base may comprise extraneous fastening ports compared to the number of modules. For example, the base may comprise 1-5 fastening ports per module. Having a plurality of fastening ports provides the beneficial effect that the studs may be rearranged to suit different module configurations and / or different number of modules.

In Fig. 6B, the base module 200 is seen from below (the direction opposite from the attachment 202). The plurality of studs 211 are shown as in Fig. 6A. In exemplary embodiments, the base body 201 may comprise at least one cavity such as through-hole. Such cavities may be provided on any surface of the base body 201 and are useful in order to allow cables, such as power, liquid or communications cables, to pass through the body 201. Said at least one cavity has been omitted from Figures 6A-6D for reasons of clarity. Further, the base body 201 may beneficially comprise channels formed into or affixed upon the body 201, such as pneumatic channels or channels for liquid, for example for media used in liquid handling operations.

As can be seen in Fig. 6B, the base body 201 may comprise a plurality of ports, such as ports 230. Port(s) 230 are configured to receive an alignment pin attached to a housing, such as alignment pin 126. The base may comprise a total of 1-200 fastening ports for alignment pins, in particular 6 - 36 ports, for example 6, 12, 18, 24, 36 ports. The base may comprise an equal number of ports for studs and ports for pins.

In Fig. 6C, the base 200 is seen from below. A plurality of modules 120 are attached to the base. More specifically, 6 pairs of interlocked modules are attached to the base, so 12 modules in total. The modules 120 are independent from one another, that is to say they are individually attachable and detachable from the base. As can be seen, the modules 120 are arranged in the beneficial paired interlocked configuration. The modules 120 each have a pipette mandrel 121, as they are a pipette module. A sensor module, for example module 110, may also be used alternatively/additionally to one or more pipetting modules. In such a case, the sensing unit(s) 111 would be situated in place of the mandrel(s) 121. Due to the use of the paired interlocked configuration, the mandrels 121 and/or sensing units 111 (the tooling of the modules) of the modules 100 are arranged in a line, similar to figure 3A and 3B. Further, the distance between the tools is optimized for use with a microwell plate, for example for a 96-well plate the tool-to-tool distance (center-to-center) could be approximately 9 millimeters, as discussed above.

In Fig. 6D, a perspective view of the base is provided wherein a plurality of modules 100 are attached to the base. It can be seen that the modules as arranged in the figure provide a compact package, suitable for rapid robot movement, for example.

It is noted that the interlocked configuration, as shown in Figures 3A, 3B and 6C, is not mandatory for the use of the modules, although it is very beneficial. In situations where the module has an 18 millimeter width and a 96-well plate is being used (having 8 rows), due to the individual attachment of each module it is possible to affix 8 modules side-by-side corresponding to the well plate rows (none of the modules is in the interlocked pair configuration with respect to one another). This has the effect of improving the process speed as each module corresponds to a row. In a variation of that situation, it is possible that 8 pipetting modules are affixed to the fixture base side-by-side and that one or more of said modules are paired in an interlocked manner with an sensing module, such as an imaging module, so that the pipetting process can employ the sensing data during the process without the need for reconfiguration or additional tools.

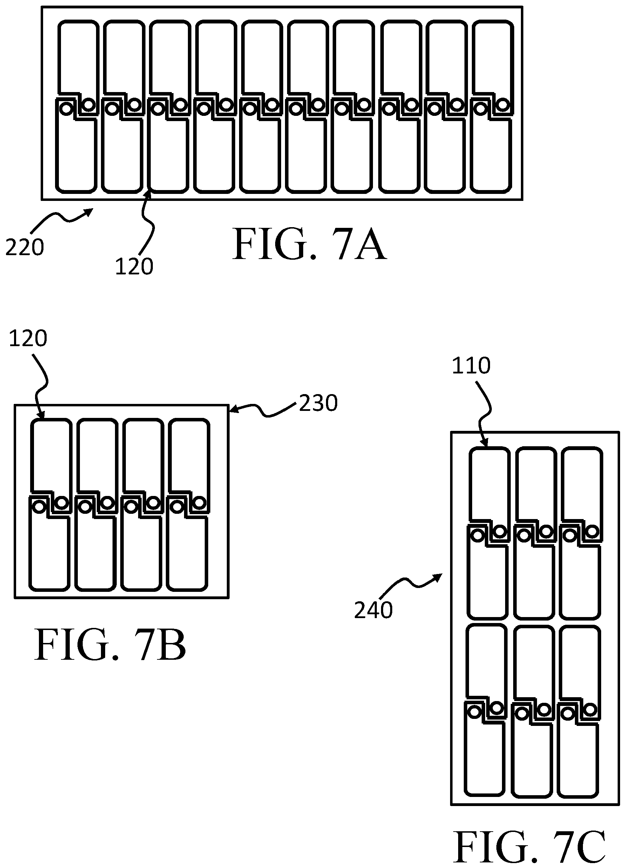

FIGURES 7A - 7C show a schematic diagram of exemplary embodiments of the present disclosure, wherein bases 220, 230 and 240 are shown from below. Said bases resemble base 200 and are adapted to hold different numbers and/or arrangements of modules 120 and/or 110. In other words, bases 220, 230 and 240 are configured to have a suitable number of studs extending from the base body to accommodate the desired number of modules.

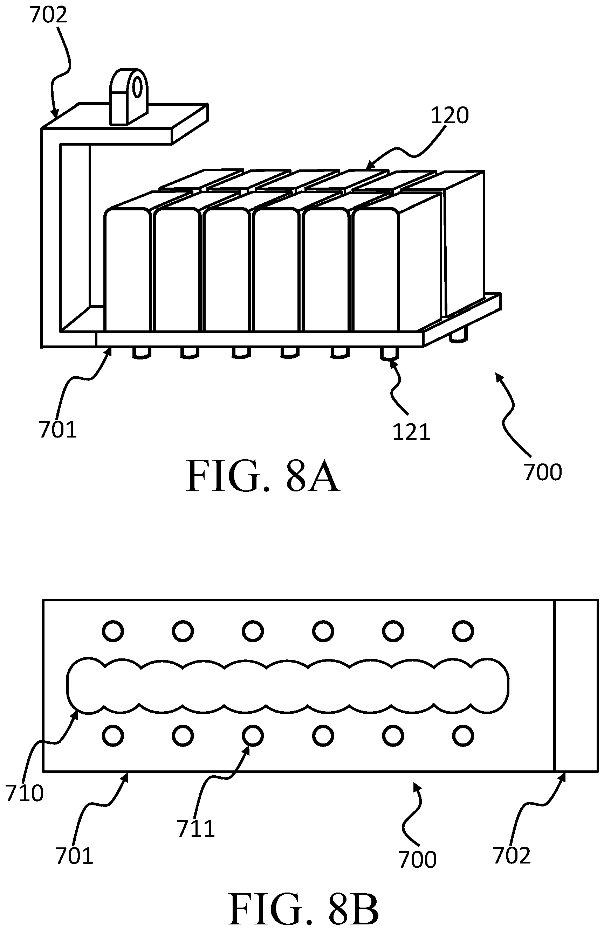

FIGURES 8A - 8B show a schematic diagram of a tray-type module fixture base 700. The tray-type module fixture base holds at least one module 120 from below the module. In other words, the module 120 rests upon the tray-type module fixture base body 701. Tray-type module fixture base body 701 comprises a hole 710 in the form of a through-hole to allow the module tooling, such as the mandrel 121 and/or a sensor, for example an optical device, to pass through the base body. The tooling is thus usable for liquid handling operations occurring beneath the tray-type module fixture base 700.

Tray-type module fixture base 700 may comprise an attachment means 702 as shown in Figure 8A. Attachment 702 is usable to attach the module fixture base to a manipulator, such as a robot, for example a liquid handling robot or an automated or computer-controlled multi-axis router. The attachment 702 may be mechanically simple as exemplarily disclosed within Figure 8A or it may be adapted to suit the handling device. For example it may be suitable to couple to an end-of-arm-tooling of an industrial robot.

Figure 8B is a view of the tray-type module fixture base 700 from above, depicted wherein no modules are present. Some details of the attachment 702 are omitted for the sake of clarity. As seen in the figure, a plurality of ports are provided on the base body 701, for example fastening ports 711. Ports 711 are provided in the vicinity of the hole 710. Ports 711 may be configured to receive studs and/or alignment pins. Said studs and/or pins may be fastened to the base body 701 via the above mentioned ways of fastening studs. The base may comprise extraneous fastening ports, which provides the beneficial effect that the studs may be rearranged to suit different module configurations and / or different number of modules.

Alternatively or additionally, the tray-type module fixture base 700 may have one or more indentations in the body 701 which are shaped to hold the modules, and/or studs and/or pins protruding from the modules. Indentations are not shown in Figure 8B but are machined into the top surface of the body 701 in such a manner that a reasonably tight fit is achieved when placing the modules into the respective indentations.

A benefit of using the tray-type module fixture base 700 or the module fixture base 200 is that due to the secure attachment of the modules to the base, the entirety of the base including any modules attached thereto may be tilted or otherwise manipulated at once.

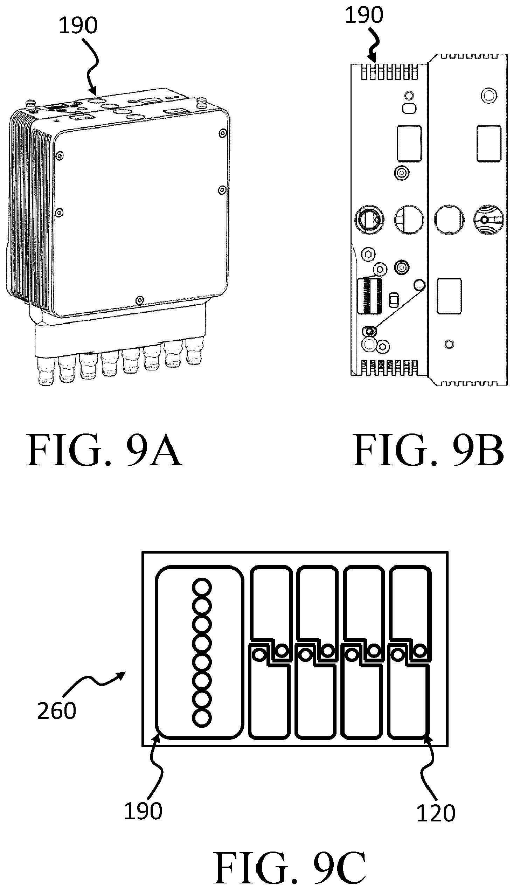

FIGURES 9A - 9C show a schematic diagram of exemplary embodiments of the present disclosure, wherein module 190 is shown in a isometric view, from above, and attached to a fixture base, respectively. Module 190 is an 8-channel pipetting module. Each channel may have its own cylinder or the channels may share a cylinder. Module 190 comprises a pipetting mechanism, for example a mechanism similar to mechanism 123.

Module 190 has a footprint, that is to say a cross section, of 2x2 modules 120. In other words, module 190 requires the same space as two interlocked pairs of modules 120 (totalling 4 modules 120). Module 190 may be used with any suitable fixtures, including the module fixture bases. Module 190 comprises a housing which is configured for attachment similar to housing 101. The location of components on the housing of module 190, for example alignment pins and/or stud ports, may correspond to the locations of said components on housing 101. In other words, the housing of module 190 may be configured so that module 190 is attachable to a fixture in place of or in addition to modules comprising housing 101. For example, two pairs of modules 120 may be replaced by module 190. Module 190 may be used in conjunction with other modules without affecting the other modules or having to reconfigure the base fixture.

Fig. 9C shows a fixture base 260, similar to base 200, and arranged modules from below. Fig. 9C is comparable to Fig. 7A, which comprises 10 pairs of interlocked modules 120 (totalling 20 modules 120). In Fig. 9C, the first and last two pairs of modules 120 are replaced with modules 190 compared to Fig. 7A. Thus, as shown by the figure, two adjacent pairs of modules 120 may be replaced with a single module 190, for example when using any of the module fixture bases discussed herein.

Module 190 may be configured in a first exemplary configuration so that module 190 comprises a maximum dispensable volume of liquid to be between 60 microliters and 125 microliters for each channel. Suitable tips are 10 microliter tips or 60 - 125 microliter tips. The dispensing volume is adjustable. Suitable dispensing volumes for each channel are from 0.2 microliters to 120 microliters, in particular 5 microliters, 10 microliters, 60 microliters. For example, 100 microliters may be dispensed from each channel using a 100 microliter tip or a 125 microliter tip. For example, 10 microliters may be dispensed from each channel using a 10 microliter tip.

Module 190 may be configured in a second exemplary configuration so that module 190 comprises a maximum dispensable volume of liquid to be between 60 microliters and 1200 microliters for each channel, for example to be between 1000 microliters and 1200 microliters. Suitable tips are 1000 microliter tips or 300 microliter tips. The dispensing volume is adjustable. Suitable dispensing volumes for each channel are from 4 microliters to 1200 microliters, in particular 5 microliters, 10 microliters, 15 microliters, 20 microliters, 300 microliters, 1000 microliters, 1200 microliters. For example, 1000 microliters may be dispensed from each channel using a 1000 microliter tip. For example, 300 microliters may be dispensed from each channel using a 300 microliter tip.

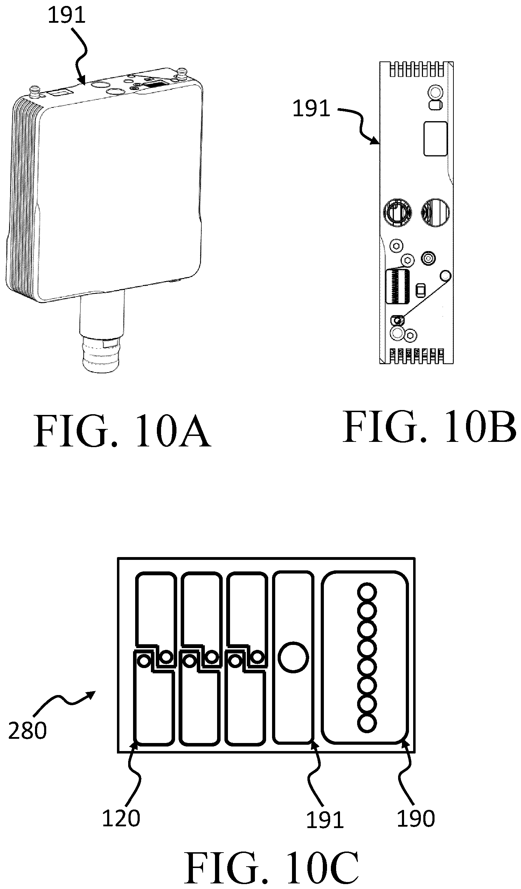

FIGURES 10A - 10C show a schematic diagram of exemplary embodiments of the present disclosure, wherein module 191 is shown in a isometric view, from above, and attached to a fixture base, respectively. Module 191 is a single-channel pipetting module. Module 191 may have a dispensing volume from 1000 µl to 8000µl, for example 5000 µl. Module 191 comprises a pipetting mechanism, for example a mechanism similar to mechanism 123.

Module 191 has a footprint, that is to say a cross section, of 1x2 modules 120. In other words, module 191 requires the same space as one interlocked pair of modules 120 (totalling 2 modules 120). Module 191 may be used with any suitable fixtures, including the module fixture bases. Module 191 comprises a housing which is configured for attachment similar to housing 101. The location of components on the housing of module 191, for example alignment pins and/or stud ports, may correspond to the locations of said components on housing 101. In other words, the housing of module 191 may be configured so that module 191 is attachable to a fixture in place of or in addition to modules comprising housing 101. For example, two pairs of modules 120 may be replaced by module 191. Module 191 may be used in conjunction with other modules without affecting the other modules or having to reconfigure the base fixture.

Fig. 10C shows a fixture base 280, similar to base 200, and arranged modules from below. Fig. 10C is comparable to Fig. 7A, which comprises 10 pairs of interlocked modules 120 (totalling 20 modules 120). In comparison with Fig. 7A, in Fig. 10C, the second pair and the eight pair of modules 120 are replaced by modules 191. Further, the last two pairs of modules 120 are replaced with module 190. Thus, as demonstrated by the figure, any interlocked pair of modules 120 may be replaced with a single module 191, for example when using any of the module fixture bases discussed herein.

Module 191 may be configured in a first exemplary configuration so that module 191 comprises a maximum dispensable volume of liquid to be between 50 microliters and 5000 microliters, in particular between 1000 microliters and 5000 microliters. Suitable tips are 1000 microliter tips or 5000 microliter tips. The dispensing volume is adjustable. Suitable dispensing volumes are from 50 microliters to 6000 microliters, in particular 100 microliters, 200 microliters, 1000 microliters, 1200 microliters, 5000 microliters. For example, 1000 microliters may be dispensed using a 1000 microliter tip. For example, 5000 microliters may be dispensed using a 5000 microliter tip.

Some benefits and advantages of the embodiments presently disclosed are as follows: The modular structure allows a user to select the number of modules depending on the application. For example, the user may use 8 modules for operations utilizing a 96-well plate and 16 modules for operations utilizing a 384-well plate. As discussed above, not all modules have to be in the interlocked pair configuration in all situations. Further, as seen in for example figure 9C, different types of modules, for example modules 100, 110, 120, 190, 191, may be used interchangeably in connection with a common fixture base, for example base 200, 260, 280, 700. Modules may be swapped quickly due to the attachment means discussed herein, for example the stud and/or alignment pins which allow a module to be pulled off the base.

A further benefit is that by using at least some of modules and bases disclosed herein, a compact solution can be achieved that still has high performance. When mounting the module(s) and base on a handling apparatus such as a manipulator, the compact size minimizes the effects of torque on the manipulator, thus leading to increased precision.

With respect to the control electronics (also known as a controller), the control electronics which control a module may be comprised within said module, within a fixture base, within a manipulator, or within an external computer. Further, a fixture base may comprise a fixture base controller, which may be configured to control at least one of: the fixture base, a module. The control electronics may comprise at least some of the following: a port, a wired communication interface, a wireless communication interface, a battery, a processor. One type of controller may comprise, for example, at least one computing device such as a user device, a server, a node or a cloud computing device. Comprised in the controller and/or the computing device is a processor, which may comprise, for example, a single- or multi-core processor wherein a single-core processor comprises one processing core and a multi-core processor comprises more than one processing core. The processor may comprise more than one processor. A processing core may comprise, for example, a Cortex-A8 processing core by ARM Holdings or a Steamroller processing core produced by Advanced Micro Devices Corporation. The processor may comprise at least one Qualcomm Snapdragon and/or Intel Core processor, for example. The processor may comprise at least one application-specific integrated circuit, ASIC. The processor may comprise at least one field-programmable gate array, FPGA. The processor may be a means for performing method steps in the computing device. The processor may be configured, at least in part by computer instructions, to perform actions.

In the context of the present disclosure, it is understood that the controller may comprise several devices, for example modules, in cooperation. The devices may interface via a network used to facilitate communication to and from control apparatuses, modules (such as imaging modules, pipette modules), liquid handling devices, measurement devices, manipulators, motors, gantries and other elements. Usable network technologies comprise: CANBUS, wireless local area network, RS-485, WLAN, Ethernet, universal serial bus, USB, and/or worldwide interoperability for microwave access, WiMAX, standards, and satellite communication methods, direct wiring such as electrical wires, for example. Alternatively or additionally, a proprietary communication framework may be utilized. In some embodiments, separate networks may be used for one or more of the following purposes: communication between modules, communication between controllers and modules, communication between controllers and manipulators, et cetera.

The control apparatus and/or user device may at least one of the following: a personal computer, a server, a mobile phone, a smartphone, a tablet device, or any type of suitable electronic device.

The present disclosure can also be utilized via the following clauses:
Clause 1. A module for liquid handling operations, the module comprising a housing element, wherein the housing element comprises a protrusion on a front face of the housing element, wherein the protrusion has a width not more than half of the total width of the housing element.
Clause 2. The module of any preceding clause, wherein the housing element comprises a back face and a front face comprising two portions, wherein the protrusion is formed by the first portion of the front face protruding outwardly from the front face and wherein the first portion of the front face has a width which is less than the width of the back face.
Clause 3. A pair of liquid handling modules comprising a first module and a second module, wherein the first module and the second module comprise a front face comprising a first and a second portion, wherein the first portion protrudes in an outward direction from the front face and has a width which is less than half of the width of the front face, and wherein the first module and the second module are configured to be arranged in a interlocked configuration by orienting the modules in such a manner that the first portion of the first module faces the second portion of the second module and the second portion of the first module faces the first portion of the second module, wherein the front face of the first module and the front face of the second module are parallel to each other.
Clause 4. A liquid handling module, comprising a housing, a pipetting mechanism, and at least one pipette mandrel suitable for a pipette tip, wherein the housing comprises at least one port configured to receive a fastening stud, and wherein the module comprises from 2 to 12 pipette mandrels, in particular 8 pipette mandrels.
Clause 5. A liquid handling module, comprising a housing, a pipetting mechanism, and at least one pipette mandrel suitable for a pipette tip, wherein the housing comprises at least one port configured to receive a fastening stud, and wherein the module is configured to have an adjustable dispensing volume from 100 microliters to 6000 microliters, for example 100 microliters, 200 microliters, 500 microliters, 1000 microliters, 1200 microliters, 5000 microliters, in particular 1000 microliters or 5000 microliters.
Clause 6. A liquid handling module, comprising a housing, a pipetting mechanism, and at least one pipette mandrel suitable for a pipette tip, wherein the housing comprises at least one port configured to receive a fastening stud, and wherein the module is configured to have an adjustable dispensing volume from 4 microliters to 1200 microliters, for example 5 microliters, 10 microliters, 15 microliters, 20 microliters, 300 microliters, 1000 microliters, 1200 microliters, in particular 1000 microliters or 300 microliters.
Clause 7. The module of clause 6, wherein the housing comprises a back face and a front face comprising two portions, wherein a protrusion is formed by the first portion of the front face protruding outwardly from the front face and wherein the first portion of the front face has a width which is less than the width of the back face.
Clause 8. The module of clause 6, wherein the module comprises from 2 to 12 pipette mandrels, in particular 8 pipette mandrels.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in liquid handling application, for example in laboratory settings.

**REFERENCE SIGNS LIST**

| 100, 301, 302 | Module |
|---|---|
| *z* | height of housing of module |
| *h* | height of module including mandrel and tip |
| *x* | width of module |
| *y* | depth of module |
| *t* | Tool-to-tool distance |
| 101 | Housing element |
| 101a | Housing protrusion width |
| 101b | Housing width minus protrusion |
| 101c | Housing protrusion length |
| 102A | housing protrusion front face |
| 102B | housing front face (remainder face) |
| 104 | housing back face |
| 105 | heat dissipation grooves |
| 107A | Stud port |
| 107B | Tooling port (Mandrel outlet port) |
| 108A, 108B | Interface port |
| 109A, 109B | Stud port |
| 110 | Sensor module |
| 111 | Sensing unit |
| 120, 190, 191 | Pipetting module |
| 121 | Pipette mandrel |
| 122 | Ejector sleeve |
| 123 | Pipetting mechanism |
| 124 | Stud mechanism |
| 125 | bushing |
| 126 | Alignment pin |
| 200, 220, 230, 240, 260, 280 | module fixture base |
| 201 | module fixture base body |
| 202 | module fixture base attachment |
| 203 | module fixture base indicator |
| 211 | module fixture base stud |
| 212 - 222 | module fixture base studs |
| 225 | module fixture base port |
| 700 | tray-type module fixture base |
| 701 | tray-type module fixture base body |
| 702 | tray-type module fixture base attachment |
| 710 | tray-type module fixture base hole |
| 711 | tray-type module fixture base port |

## Claims

1. A module (100, 110, 120, 301, 302) for liquid handling operations, the module (100, 110, 120) comprising:
a housing element (101) having a width, height, and depth, wherein the housing element (101) comprises: a back face (104) and a front face comprising a first portion (102A) and a second portion (102B),
wherein the first portion (102A) of the front face protrudes outwardly from the front face and wherein the first portion (102A) of the front face has a width which is less than the width of the back face (104).

2. The module (100, 110, 120, 301, 302) of claim 1, wherein the width of the first portion (102A) of the front face is not more than half the width of the back face (104).

3. The module (100, 110, 120, 301, 302) of any one of the preceding claims, wherein the width of the back face (104) does not exceed 18 millimeters, the width of the first portion (102A) of the front face does not exceed more than 9 millimeters and wherein the width of the module does not exceed 18 millimeters.

4. The module (100, 120, 301, 302) of any one of the preceding claims, wherein the module (100, 120, 301, 302) further comprises a pipetting mechanism (123) located within the housing element (101), the pipetting mechanism (123) comprising:
- at least one electric motor,
- at least one piston connected to the electric motor and configured for fluid displacement when said piston is moved within a cylinder, and
- at least one pipette mandrel (121), wherein the pipette mandrel (121) extends at least partially outside the housing element (101),
wherein the pipette mandrel (121) extends via a port (107B), said port being located within the protrusion formed by the front face (102A).

5. The module (100, 120, 301, 302, 110) of any one of the preceding claims, wherein the module (100, 120, 301, 302, 110) further comprises at least one of the following: a sensing unit (111) such as an imaging unit.

6. The module of any one of the preceding claims, wherein the housing element (101) further comprises at least one cavity (107A, 107B, 108A, 108B, 109A, 109B) in at least one of: a top face or a bottom face of the housing element (101), wherein the at least one cavity (107A, 107B, 109A, 109B) comprises locking means (125) configured to attach a stud (211 - 222) inserted into said cavity (107A, 107B, 109A, 109B) to the housing element 101, wherein said locking means are preferably at least one of: a bushing, a push fit arrangement or a spring centering arrangement.

7. The module of any preceding claim, wherein the housing element (101) further comprises at least one alignment pin (126) attached to at least one of the top face or bottom face.

8. The module of any one of the preceding claims, wherein the housing element comprises at least one port for at least one of: communications, power transfer.

9. The module of any one of the preceding claims, wherein the housing element comprises heat dissipation grooves (105) formed in at least part of at least one face or surface.

10. A liquid handling apparatus, comprising at least one first module (100, 110, 120, 301, 302) from any one of the preceding claims and at least one second module (100, 110, 120, 301, 302) from any one of the preceding claims, wherein said first module (100, 110, 120, 301, 302) and said second module (100, 110, 120, 301, 302) are arranged in a paired interlocked arrangement, wherein in the paired interlocked arrangement the first portion (102A) of the front face of the first module (100, 110, 120, 301, 302) and the second portion (102B) of the front face of the second module (100, 110, 120, 301, 302) are facing each other and in proximity and/or contacting each other.

11. The liquid handling apparatus of claim 10, wherein the combined width of the paired interlocked arrangement of the first and second module (100, 110, 120, 301, 302) does not exceed 18 millimeters.

12. The liquid handling apparatus of any one of claims 10 or 11, wherein at least one of the first module (100, 110, 120, 301, 302) or the second module (100, 110, 120, 301, 302) comprises a pipetting mechanism (123) located within the housing element (101), the pipetting mechanism (123) comprising:
- at least one electric motor,
- at least one piston connected to the electric motor and configured for fluid displacement when said piston is moved within a cylinder, and
at least one pipette mandrel (121) connected to the cylinder, wherein the pipette mandrel (121) extends at least partially outside the housing element (100).

13. The liquid handling apparatus of any one of claims 10 - 12, wherein the apparatus comprises a third automated module (191), wherein said third automated module comprises a housing, a pipetting mechanism, and at least one pipette mandrel suitable for a pipette tip, wherein said housing comprises at least one port configured to receive a fastening stud, and wherein the third automated module is configured to have an adjustable dispensing volume from 100 microliters to 6000 microliters, in particular 1000 microliters or 5000 microliters.

14. The liquid handling apparatus of any one of claims 10 - 13, wherein the apparatus comprises an additional automated module (190), wherein said additional automated module comprises a housing, a pipetting mechanism, and at least one pipette mandrel suitable for a pipette tip, wherein said housing comprises at least one port configured to receive a fastening stud, and wherein the additional automated module comprises from 2 to 12 pipette mandrels, in particular 8 pipette mandrels.

15. The liquid handling apparatus of any one of claims 10 - 13, wherein the apparatus comprises at least three pairs of automated modules (100, 110, 120), preferably four pairs, in particular six pairs.

16. The liquid handling apparatus of any one of claims 10 - 15, wherein the apparatus further comprises a module fixture base and wherein the automated modules are attached to the module fixture base via a stud protruding from the module fixture base.

17. The liquid handling apparatus of any one of claims 10 - 15, wherein the apparatus further comprises a tray-type module fixture base (700) comprising a body (701) and wherein the automated modules (100, 110, 120, 301, 302) are attached to the tray-type module fixture base (700) via at least one of: one or more indentations in the body (701) which are shaped to hold the automated modules (100, 110, 120, 301, 302), and/or pins protruding from the automated modules (100, 110, 120, 301, 302) which connect to ports (711) on the body (701).
